# EUROPÄISCHE PATENTSCHRIFT

(11) **EP 1 886 714 B1**
(45) Veröffentlichungstag und Bekanntmachung des Hinweises auf die Patenterteilung: **22.04.2009**
(21) Anmeldenummer: 07018470.0
(22) Anmeldetag: 17.07.2006
(51) Int. Cl.: A62D 5/00, B01D 39/08, B01J 20/28, D06M 23/12

(54) **Textilmaterial, beaufschlagt mit Wirkstoffen mit physiologischer und/oder technischer Wirkung enthaltenden Mikrokapseln, und seine Verwendung**
Textile material, charged with microcapsules containing agents with physiological and/or technical effect and its use
Matériau textile, revêtu de substances actives dotées de microcapsules ayant un effet physiologique et/ou technique, et son utilisation

(30) Priorität: 16.09.2005 DE 102005044504
(43) Veröffentlichungstag der Anmeldung: 13.02.2008
(62) Teilanmeldung aus: 06014817.8
(73) Patentinhaber: Blücher GmbH, 40699 Erkrath (DE)
(72) Erfinder: Böhringer, Bertram, Dr., 42115 Wuppertal (DE); Klemund, Michael, 40239 Düsseldorf (DE)
(74) Vertreter: Gesthuysen, von Rohr & Eggert

(56) Entgegenhaltungen:
- EP-A- 0 436 729
- EP-A- 0 818 230
- WO-A-00/05970
- WO-A-20/04107818
- WO-A-20/05018795
- DE-A1- 10 261 996
- DE-C1- 4 206 443
- US-A- 4 774 133
- US-A1- 2003 054 141

## Beschreibung

Die vorliegende Erfindung betrifft ein mit wirkstoffhaltigen Mikrokapseln beaufschlagtes funktionelles Textilmaterial nach dem Oberbegriff des Anspruchs 1, sowie dessen Verwendung zur Herstellung von Bekleidung sowie von Schutzmaterialien aller Art und darüber hinaus zur Herstellung von Filtern und Filtermaterialien aller Art. Weiterhin betrifft die vorliegende Erfindung Bekleidung und Schutzmaterialien sowie Filter und Filtermaterialien, welche unter Verwendung des vorgenannten funktionellen Textilmaterials hergestellt sind.

Wirkstoffe aller Art lassen sich heutzutage auch in Textilien einarbeiten. Dies kann beispielsweise dadurch geschehen, daß die entsprechenden Wirkstoffe in die Fasern eingesponnen werden. Auf diese Weise wird aber eine nur oftmals unzureichende Wirkstoffkonzentration erreicht. Zudem ist eine kontrollierte Freisetzung nicht immer gewährleistet.

Darüber hinaus lassen sich Wirkstoffe alternativ auch in sogenannte Mikrokapseln einbringen; Ziel der Verkapselung ist es, die Wirkstoffe fest einzuschließen, so daß sich örtlich gezielt eine bestimmte Dosierung erreichen läßt. Grundsätzlich gibt es zwei verschiedene Arten von Mikrokapseln zu diesem Zweck, nämlich Matrixverkapselungen einerseits und Kern/Hülle-Verkapselungen andererseits. Um die Wirkstoffe zielgerichtet zur Entfaltung zu bringen, müssen die Mikrokapseln auf die Textilien aufgebracht werden. Realisiert wird dies heute oftmals dadurch, daß die Mikrokapseln in komplexe Verbundmaterialien eingelagert werden, die dann Bestandteil der Textilien werden. Alternativ werden die Mikrokapseln oft in Beschichtungen, insbesondere Polyurethan-Beschichtungen eingebracht, welche dann vollflächig auf die Textilien aufgebracht werden, so daß die Textilien hierdurch zumindest einen Teil ihrer Luftdurchlässigkeit verlieren und die Wirkstofffreisetzung nicht immer kontrolliert erfolgen kann.

Daher hat es nicht an Versuchen gefehlt, Textilmaterialien mit Wirkstoffen zu versehen, welche kontrolliert zu einem gewünschten Zeitpunkt freigesetzt werden bzw. zu einem gewünschten Zeitpunkt ihre Wirkung entfalten. Dieses Problem ist im Stand der Technik bislang nicht zufriedenstellend gelöst worden.

Die US 2003/0054141 A1 betrifft einen beschichteten Gegenstand mit reversiblen thermischen Eigenschaften mit einem eine Oberfläche aufweisenden Substrat und einer Beschichtung, welche einen Teil der Oberfläche bedeckt und welche ein Polymermaterial und ein temperaturregulierendes Material umfaßt, welches in dem Polymermaterial dispergiert ist, wobei die Beschichtung aus einer Vielzahl von diskontinuierlichen Bereichen gebildet ist, welche voneinander getrennt sind und einen verbleibenden Teil der Oberfläche zur Bereitstellung einer mitunter verbesserten Flexibilität und Luftdurchlässigkeit des beschichteten Gegenstandes freigeben (Anspruch 1). Dieses Dokument zielt nur auf den Einsatz von Materialien mit temperaturregulierenden Eigenschaften ab, und die dort beschriebenen Materialien werden in dem zur Beschichtung verwendeten Polymaterial dispergiert bzw. verteilt und sind somit in das Polymermaterial eingelagert.

Weiterhin betrifft die US 4 774 133 A einen Gegenstand mit einem thermoplastischen Polymerträger, wobei mindestens eine Oberfläche des Trägers spezielle Mikrokapseln aufweist, welche über Reiß- bzw. Brucheigenschaften verfügen und welche eine Flüssigkeit in sich tragen. Die Mikrokapseln sind über ein Kleberharz mit dem Träger verbunden, wobei es in Dl vorgesehen ist, die Kapseln in den Träger einzudrücken bzw. einzubetten. Gemäß einer weiteren Ausgestaltung können die Mikrokapseln ohne Verwendung eines Klebstoffes in den thermoplastischen Träger eingedrückt werden (Anspruch 1 und Zusammenfassung). Als Träger wird ein thermoplastisches Polymersubstrat verwendet, welches in Form einer Folie ausgebildet sein soll.

Schließlich betrifft die WO 2005/018795 A1 Mikrokapseln, die auf Fasern aufgebracht werden, um eine langsame Freisetzung von Produkten, wie Duftstoffen, antimikrobiellen Substanzen, Insektiziden, Antioxidantien, Vitaminen, zu ermöglichen. Die Mikrokapseln sollen zudem in Form von Materialien, wie etwa thermochrome Pigmente, welche bei Erwärmung ihre Farbe verändern, oder als Phasenumwandlungsmaterialien ("*phase change materials*", PCM), welche eine thermische Isolierung/Steuerung übermitteln, verwendet werden können. Die Mikrokapseln sind aus zwei Polymerwänden zusammengesetzt, wobei die Außenwand für eine thermische Fusion auf ein Textilsubstrat thermoplastisch sein soll (Anspruch 1 sowie Zusammenfassung). Die doppelwandigen Mikrokapseln sollen durch Erwärmen der thermoplastischen Außenhülle, also durch eine wärmeinduzierte Eigenklebrigkeit, mit dem Trägermaterial verbunden werden.

Es ist daher die Aufgabe der vorliegenden Erfindung, ein funktionelles Textilmaterial bereitzustellen, welches die zuvor geschilderten Nachteile des Standes der Technik zumindest weitgehend vermeidet oder aber zumindest abschwächt. Insbesondere sollte sich ein solches Textilmaterial zu einer vielseitigen Verwendbarkeit eignen, insbesondere zur Herstellung von Bekleidung und von Schutzmaterialien aller Art sowie von Filtern und Filtermaterialien aller Art.

Insbesondere liegt eine Aufgabe der vorliegenden Erfindung darin, ein mit wirkstoffhaltigen Mikrokapseln beaufschlagtes funktionelles Textilmaterial bereitzustellen, welches einerseits über eine gute Atmungsaktivität, insbesondere eine gute Gas- und/oder Wasserdampfdurchlässigkeit, verfügt und andererseits die Wirkstoffe an gewünschtem Ort und/oder zu einem gewünschten Zeitpunkt zur Entfaltung bringen bzw. freizusetzen kann.

Zur Lösung der zuvor geschilderten Aufgabenstellung schlägt die vorliegende Erfindung ein funktionelles Textilmaterial gemäß Anspruch 1. Weitere, vorteilhafte Ausgestaltungen des erfindungsgemäßen funktionellen Textilmaterials sind Gegenstand der Unteransprüche.

Weiterer Gegenstand der vorliegenden Erfindung ist die Verwendung des funktionellen Textilmaterials nach der vorliegenden Erfindung, insbesondere zur Herstellung von Bekleidung sowie Schutzmaterialien aller Art und von Filtern sowie Filtermaterialien aller Art.

Schließlich sind ein weiterer Gegenstand der vorliegenden Erfindung die mit dem erfindungsgemäßen funktionellen Textilmaterial hergestellten Bekleidungsstücke und Schutzmaterialien sowie Filter und Filtermaterialien.

Gegenstand der vorliegenden Erfindung - gemäß einem ersten Aspekt der vorliegenden Erfindung - ist somit ein funktionelles Textilmaterial, wobei das funktionelle Textilmaterial einen gas-, wasser- und wasserdampfdurchlässig ausgebildeten textilen Träger umfaßt, wobei der textile Träger mit Mikrokapseln beaufschlagt ist, wobei die Mikrokapseln mindestens einen Wirkstoff enthalten, wobei der Wirkstoff ausgewählt ist aus Stoffen mit physiologischer und/oder technischer Wirkung, und wobei die Mikrokapseln mittels eines diskontinuierlich auf dem textilen Träger applizierten Klebstoffs an dem textilen Träger befestigt sind, wobei das funktionelle Textilmaterial dadurch gekennzeichnet ist,
daß der Stoff mit physiologischer und/oder technischer Wirkung aus der Gruppe von pharmazeutischen und/oder medizinischen Wirkstoffen, Katalysatoren und/oder katalytisch aktiven Verbindungen, Chemikalien sowie Mischungen der vorgenannten Verbindungen ausgewählt ist,
daß der Klebstoff den textilen Träger insgesamt zu höchstens 30 % bedeckt und daß die Mikrokapseln zu mindestens 50 % nicht von Klebstoff bedeckt sind.

Denn die Anmelderin hat überraschenderweise herausgefunden, daß sich ein hochflexibles, mechanisch stabiles, atmungsaktives, insbesondere gas- und/oder wasserdampfdurchlässiges funktionelles Textilmaterial herstellen läßt, indem die wirkstoffhaltigen Mikrokapseln über einen nur diskontinuierlich auf dem textilen Träger applizierten Klebstoff mit dem textilen Träger des funktionellen Textilmaterials verbunden sind. Auf diese Weise gelingt es nicht nur, ein sehr gasdurchlässiges, insbesondere luftdurchlässiges, und/oder wasserdampfdurchlässiges, also insgesamt sehr atmungsaktives funktionelles Textilmaterial mit hoher mechanischer Belastbarkeit bereitzustellen, sondern man erhält aufgrund des nur diskontinuierlichen Klebstoffauftrags auch ein deutlich reduziertes Flächengewicht und eine deutlich erhöhte Flexibilität bzw. einen deutlich erhöhten Tragekomfort bei der Verarbeitung zu Bekleidungsstücken. Durch den diskontinuierlichen Klebstoffauftrag wird zudem nur ein geringer Teil der Oberfläche der Mikrokapseln belegt, so daß der überwiegende Teil der Oberfläche der Mikrokapseln für die Freisetzung bzw. Entfaltung der Wirkstoffe frei zugänglich (d. h. nicht mit Klebstoff belegt) ist, so daß aufgrund des diskontinuierlichen Klebstoffauftrags auch die Wirkstoffeffizienz deutlich erhöht ist.

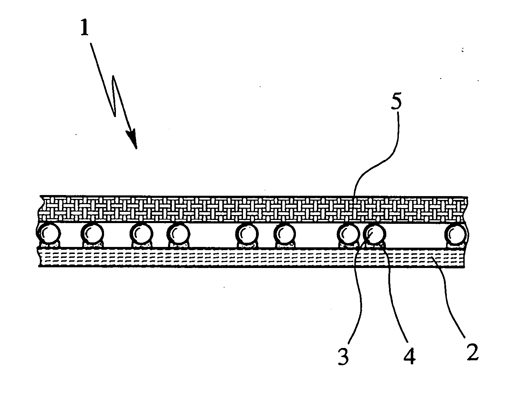

Weitere Vorteile, Eigenschaften, Aspekte und Merkmale der vorliegenden Erfindung ergeben sich aus der folgenden Beschreibung eines in der Zeichnung dargestellten bevorzugten Ausführungsbeispiels.

Die einzige Figur zeigt eine schematische Schnittdarstellung durch den Schichtaufbau eines funktionellen Textilmaterials gemäß einem bevorzugten Ausführungsbeispiel der vorliegenden Erfindung.

Die einzige Figur zeigt ein erfindungsgemäßes funktionelles Textilmaterial 1, wobei das funktionelle Textilmaterial 1 einen textilen Träger 2 umfaßt. Der textile Träger 2 ist mit Mikrokapseln 3, welche mindestens einen Wirkstoff enthalten, beaufschlagt. Erfindungsgemäß erfolgt die Befestigung der wirkstoffhaltigen Mikrokapseln 3 an dem textilen Träger 2 mittels eines diskontinuierlich auf dem textilen Träger 2 applizierten Klebstoffs 4. Eine Besonderheit der vorliegenden Erfindung ist insbesondere darin zu sehen, daß die Verklebung der Mikrokapseln 3 mit dem textilen Träger 2 des funktionellen Textilmaterials 1 durch einen nur diskontinuierlichen Klebstoffauftrag, insbesondere in Form von einzelnen, nichtzusammenhängenden (d. h. also räumlich getrennt voneinander vorliegenden bzw. nicht miteinander verbundenen) Kleberpunkten, erfolgt. Die mit dem diskontinuierlichen Klebstoffauftrag verbundenen Vorteile wurden zuvor bereits geschildert. Eine weitere Besonderheit der vorliegenden Erfindung ist zudem darin zu sehen, daß der Wirkstoff ausgewählt ist aus Stoffen mit physiologischer und/oder technischer Wirkung aus der Gruppe von pharmazeutischen und/oder medizinischen Wirkstoffen, Katalysatoren und/oder katalytisch aktiven Verbindungen, Chemikalien sowie Mischungen der vorgenannten Verbindungen.

Um einerseits eine gute Gas- und/oder Wasserdampfdurchlässigkeit und andererseits eine gute Flexibilität des erfindungsgemäßen funktionellen Textilmaterials 1 - bei gleichzeitig guter Haftung der Mikrokapseln 3 an dem textilen Träger 2 - zu gewährleisten, wird der Klebstoff 4 - wie zuvor beschrieben - diskontinuierlich auf dem textilen Träger 2 appliziert, insbesondere in Form von nichtzusammenhängenden, räumlich voneinander beabstandeten Kleberpunkten 4. Der Begriff der Kleberpunkte bezeichnet dabei insbesondere sehr kleine Klebstofftröpfen oder -häufchen, die auf den textilen Träger 2 aufgebracht sind, und zwar im allgemeinen ohne einander zu berühren; es entstehen typischerweise annähernd runde oder ovale Klebstoffstellen mit sehr geringer zweidimensionaler Ausdehnung, weshalb der Begriff der Kleberpunkte verwendet wird.

Es hat sich als besonders vorteilhaft erwiesen, wenn der Abstand der einzelnen Kleberpunkte 4 voneinander höchstens dem 20fachen, insbesondere höchstens dem 10fachen Durchmesser der Kleberpunkte 4 entspricht.

Sofern der Durchmesser der Mikrokapseln 3 mindestens 50 µm beträgt, ist es vorteilhaft, wenn der Durchmesser der Kleberpunkte 4 höchstens das 20fache, insbesondere höchstens das 10fache des Durchmessers der Mikrokapseln 3 beträgt.

Im Falle nicht vollständig runder bzw. unregelmäßig geformter Kleberpunkte bezeichnet der Begriff des Durchmessers die maximale Flächenerstreckung des betreffenden Kleberpunkts in der Projektionsebene. Die aufgetragenen Kleberpunkte können dabei grundsätzlich gleich groß oder unterschiedlich groß sein; vorteilhafterweise werden gleich große Kleberpunkte aufgetragen. Im Falle unterschiedlich großer Klebepunkte beziehen sich die vorgenannten Dimensionsangaben in bezug auf den Kleberpunkteabstand und den Durchmesser der Klebepunkte auf die jeweils größten Durchmesser.

Erfindungsgemäß wird der Klebstoff 4 in einer solchen Menge aufgetragen, daß er den textilen Träger 2 insgesamt zu höchstens 30 %, insbesondere zu höchstens 25 %, vorzugsweise zu höchstens 20 %, ganz besonders bevorzugt zu höchstens 15 %, bedeckt. Im allgemeinen bedeckt der Klebstoff 4 den textilen Träger 2 insgesamt zu 5 bis 30 %, insbesondere 10 bis 25 %, vorzugsweise 10 bis 20 %.

Im allgemeinen kann der Klebstoff 4 mit einem Flächengewicht (Trockengewicht) von 5 bis 30 g/m², insbesondere 5 bis 25 g/m², vorzugsweise 10 bis 20 g/m², auf den textilen Träger 2 aufgetragen sein.

Gemäß einer bevorzugten Ausführungsform ist der Klebstoff 4 auf den textilen Träger 2 aufgedruckt. Die Bedruckung des textilen Trägers 2 mit dem Klebstoff 4 kann beispielsweise in Form eines regelmäßigen Rasters oder Musters erfolgen. Alternativ kann die Bedruckung des textilen Trägers 2 mit dem Klebstoff 4 aber auch in Form eines unregelmäßigen, insbesondere computerberechneten Rasters oder Musters erfolgt sein; dabei sollte die Bedruckung des unregelmäßigen Rasters oder Musters derart sein, daß im Gebrauchszustand des funktionellen Textilmaterials 1 eine Gassenbildung, insbesondere ein sogenannter Moire-Effekt, vermieden wird. Im allgemeinen können derartige unregelmäßige Raster bzw. Muster für den Klebstoffauftrag computerunterstützt bzw. computergesteuert berechnet und aufgetragen werden (sogenanntes CP-Klebstoffraster bzw. Computer-Point-Klebstoffraster). Dies ist dem Fachmann an sich bekannt.

Die Bedruckung des textilen Trägers 2 mit dem Klebstoff 4 kann beispielsweise mittels einer Schablone erfolgen. Vorteilhafterweise beträgt der lichte Durchmesser der Schablone bzw. genauer gesagt der Löcher der Schablone, durch welche der Klebstoffauftrag erfolgt, 50 bis 1.000 µm, insbesondere 100 bis 575 µm, vorzugsweise 100 bis 300 µm.

Was den Klebstoff 4 als solchen anbelangt, so kommen alle dem Fachmann an sich bekannten, für diese Zwecke verwendbaren Klebstoffe in Betracht. Besonders geeignet sind Schmelzklebstoffe (sogenannte Hotmelts), insbesondere reaktive oder nichtreaktive Schmelzklebstoffe, oder aber thermoplastische Klebstoffe.

Was den textilen Träger 2 des funktionellen Textilmaterials 1 nach der vorliegenden Erfindung anbelangt, so ist dieser im allgemeinen flächig ausgebildet, d. h. der textile Träger 2 ist im allgemeinen ein textiles Flächengebilde. Insbesondere ist der textile Träger 2 ein Gewebe, Gewirke, Gestricke, Gelege, Textilverbundstoff, Vlies oder Nonwoven. Der textile Träger 2 besitzt im allgemeinen ein Flächengewicht von 25 bis 500 g/m², insbesondere 30 bis 250 g/m², vorzugsweise 35 bis 200 g/m².

Erfindungsgemäß ist der textile Träger 2 gasdurchlässig, insbesondere luftdurchlässig, und wasserdurchlässig und wasserdampfdurchlässig ausgebildet. Somit ist der textile Träger 2 gasdurchlässig, insbesondere luftdurchlässig, und wasserdurchlässig und wasserdampfdurchlässig ausgebildet.

Was die angesetzten Mikrokapseln 3 anbelangt, so kann deren Durchmesser in weiten Bereichen variieren. Im allgemeinen liegt der Durchmesser der Mikrokapseln 3 im Bereich von 1 µm bis 5 mm, insbesondere 5 µm bis 2 mm, vorzugsweise 10 µm bis 1 mm, besonders bevorzugt 50 µm bis 0,8 mm.

Grundsätzlich können die erfindungsgemäß eingesetzten Mikrokapseln 3 in Form von Matrixkapseln oder aber in Form von Kern/Hülle-Kapseln vorliegen. Von einer Matrixverkapselung spricht man insbesondere dann, wenn der oder die Wirkstoffe über die gesamte Mikrokapsel 3 in vorzugsweise homogener bzw. gleichmäßiger Verteilung vorliegt, wohingegen bei einer Kern/Hülle-Verkapselung der Wirkstoff im Inneren bzw. im Hohlraum einer Kapselhülle befindlich ist. Matrixkapseln werden insbesondere dann angewandt, wenn eine kontinuierliche Freisetzung der verkapselten Wirkstoffe über einen definierten Zeitraum erfolgen soll, wobei durch die geeignete Wahl der Matrixmaterialien und der Partikelgrößen sich unterschiedliche Freisetzungsraten einstellen lassen, wohingegen Kern/Hülle-Verkapselungen kurzfristige Freisetzungen oder aber Freisetzungen über einen sehr langen Zeitraum erfordern. Dies ist dem Fachmann als solches bekannt.

Das Kapselmaterial der Mikrokapseln 3, insbesondere das Matrixmaterial im Fall von Matrixkapseln oder das Hüllmaterial im Fall von Kern/Hülle-Kapseln, kann beispielsweise auf Basis von organischen Polymeren, organischen-anorganischen Hybridpolymeren oder anorganischen Materialien, insbesondere anorganischen Oxiden, ausgebildet sein. Dies ist dem Fachmann als solches hinlänglich bekannt, so daß auf weitere diesbezügliche Einzelheiten nicht eingegangen zu werden braucht.

Die Fixierung bzw. Befestigung der Mikrokapseln 3 an dem textilen Träger 2 erfolgt derart, daß die Mikrokapseln 3 zu mindestens 50 %, insbesondere zu mindestens 60 %, vorzugsweise zu mindestens 70 %, frei zugänglich sind, d. h. an ihrer Oberfläche nicht von Klebstoff 4 bedeckt sind. Dies ermöglicht eine besonders gute Freisetzung bzw. Wirksamkeit der verkapselten Wirkstoffe.

Die Menge, mit der die Mikrokapseln 3 auf dem textilen Träger 2 aufgetragen sind, kann in weiten Bereichen variieren. Im allgemeinen liegt sie im Bereich von 5 bis 500 g/m², insbesondere 10 bis 400 g/m², vorzugsweise 20 bis 300 g/m², bevorzugt 25 bis 250 g/m², besonders bevorzugt 50 bis 200 g/m². Hierdurch ist gewährleistet, daß einerseits ausreichende Mengen des verkapselten Wirkstoffs vorhanden sind und andererseits das Flächengewicht nicht übermäßig ansteigt.

Die Menge an in den Mikrokapseln 3 enthaltenem Wirkstoff bzw. enthaltenen Wirkstoffen kann gleichermaßen in weiten Bereichen variieren. Im allgemeinen liegt die Wirkstoffmenge im Bereich von 1 bis 99 Gew.-%, insbesondere 5 bis 90 Gew.-%, vorzugsweise 10 bis 80 Gew.-%, besonders bevorzugt 25 bis 75 Gew.-%, bezogen auf die Mikrokapseln 3.

Was den Begriff der Wirkstoffe anbelangt, so werden im Sinne der vorliegenden Erfindung hiermit solche Stoffe bezeichnet, die - im allgemeinen in relativ kleinen Mengen vorkommend oder zugeführt - eine physiologische und/oder technische Wirkung entfalten. Erfindungsgemäß geeignete Wirkstoffe sind aus der Gruppe von pharmazeutischen und/oder medizinischen Wirkstoffen, Katalysatoren und/oder katalytisch aktiven Verbindungen, Chemikalien sowie Mischungen der vorgenannten Verbindungen ausgewählt.

Wenn das funktionelle Textilmaterial 1 beispielsweise zur Herstellung von Schutzmaterialien, insbesondere Schutzanzügen, für den ABC-Schutz verwendet wird, können die Mikrokapseln 3 als Wirkstoff insbesondere einen Katalysator bzw. eine katalytisch aktive Komponente enthalten; der Katalysator bzw. die katalytisch aktive Komponente kann beispielsweise ausgewählt sein aus Enzymen und/oder Metallen, vorzugsweise Kupfer, Silber, Cadmium, Platin, Palladium, Rhodium, Zink, Quecksilber, Titan, Zirkonium und/oder Aluminium, insbesondere deren Ionen und/oder Salzen. Gemäß dieser Ausführungsform werden die Katalysatoren bzw. die katalytisch aktiven Verbindungen insbesondere in Mengen von 0,01 bis 30 Gew.-%, vorzugsweise 0,1 bis 20 Gew.-%, besonders bevorzugt 1 bis 15 Gew.-%, ganz besonders bevorzugt 1 bis 10 Gew.-%, bezogen auf das Gewicht der Mikrokapseln 3, eingesetzt.

Zum Schutz der Mikrokapseln 3 auf dem textilen Träger 2, insbesondere im Benutzungszustand, ist es vorteilhaft, wenn die Mikrokapseln 3 auf ihrer dem textilen Träger 2 abgewandten Seite mit einer textilen Abdeckschicht 5, insbesondere in Form eines textilen Flächengebildes, bedeckt bzw. beaufschlagt sind. Zur Reduktion des Gesamtflächengewichts des funktionellen Textilmaterials 1 weist die Abdeckschicht 5 im allgemeinen ein geringeres Flächengewicht als der textile Träger 2 auf, insbesondere ein Flächengewicht im Bereich von 5 bis 150 g/m², insbesondere 10 bis 125 g/m², vorzugsweise 15 bis 100 g/m², bevorzugt 20 bis 75 g/m². Im allgemeinen ist die Abdeckschicht 5 als ein vorzugsweise luftdurchlässiges textiles Materials, insbesondere als ein textiles Flächengebilde, vorzugsweise als ein Gewebe, Gewirke, Gestricke, Gelege, Textilverbundstoff, Vlies oder Nonwoven, ausgebildet.

Wenn das erfindungsgemäße funktionelle Textilmaterial 1 dazu bestimmt ist, nachfolgend zu Schutzmaterialien, insbesondere für den ABC-Schutz, wie ABC-Schutzanzügen, verarbeitet zu werden, kann es vorteilhaft sein, daß das funktionelle Textilmaterial 1 außerdem ein chemische Gifte adsorbierendes Adsorbens enthält, insbesondere der textile Träger 2 zusätzlich mit einem chemische Gifte adsorbierenden Adsorbens beaufschlagt ist (in der Figur nicht dargestellt). Ein erfindungsgemäß geeignetes Adsorbens ist insbesondere auf Basis von Aktivkohle, vorzugsweise in Form von Aktivkohleteilchen bzw. Aktivkohlepartikeln und/oder in Form von Aktivkohlefasern, ausgebildet. Das Adsorbens ist an dem funktionellen Textilmaterial 1, insbesondere an dem textilen Träger 2, vorzugsweise mittels Verkleben befestigt. Erfindungsgemäß bevorzugt eingesetzte Aktivkohle weist im allgemeinen eine innere Oberfläche (BET) von mindestens 800 m²/g, insbesondere von mindestens 900 m²/g, vorzugsweise von mindestens 1.000 m²/g, bevorzugt im Bereich von 800 bis 2.500 m²/g, auf. Für den Fall, daß das Adsorbens aus diskreten Aktivkohleteilchen, vorzugsweise in Kornform oder Kugelform, besteht, haben diese im allgemeinen mittlere Durchmesser von weniger als 1,0 mm, vorzugsweise von höchstens 0,8 mm, bevorzugt von höchstens 0,6 mm, wobei der mittlere Durchmesser jedoch mindestens 0,1 mm betragen sollte. Im Falle von Aktivkohlefasern können diese insbesondere in Form eines Aktivkohlefaserflächengebildes vorliegen, wobei das Aktivkohlefaserflächengebilde insbesondere ein Flächengewicht von 10 bis 300 g/m², insbesondere 20 bis 200 g/m², vorzugsweise 30 bis 150 g/m², aufweisen sollte (z. B. Aktivkohlefasergewebe, -gewirke, -gelege oder -verbundstoffe, insbesondere auf Basis von carbonisierter und aktivierte Cellulose und/oder auf Basis eines carbonisierten aktivierten Acrylnitrils).

Aufgrund des zuvor beschriebenen, speziellen Aufbaus des erfindungsgemä-βen funktionellen Textilmaterials 1, insbesondere infolge des diskontinuierlichen Klebstoffauftrags, ist das Gesamtflächengewicht des funktionellen Textilmaterials 1 nach der vorliegenden Erfindung relativ gering; im allgemeinen weist das funktionelle Textilmaterial 1 nach der vorliegenden Erfindung ein Gesamtflächengewicht von 75 bis 1.000 g/m², insbesondere 100 bis 800 g/m², vorzugsweise 125 bis 500 g/m², auf.

Wie zuvor beschrieben, ist das funktionelle Textilmaterial 1 vorzugsweise gasdurchlässig, insbesondere luftdurchlässig, ausgebildet. Infolge des nur diskontinuierlichen Klebstoffauftrags ist die Gas- bzw. Luftdurchlässigkeit deutlich erhöht. Im allgemeinen beträgt die Gas- bzw. Luftdurchlässigkeit des funktionellen Textilmaterials 1 mindestens 50 1·m⁻² ·s⁻¹, insbesondere mindestens 100 1·m⁻² ·s⁻¹, vorzugsweise mindestens 200 1·m⁻²·s⁻¹, besonders bevorzugt mindestens 500 1·m⁻²·s⁻¹, und kann bis zu 10.000 1·m⁻²·s⁻¹ betragen.

Aufgrund seiner speziellen Eigenschaften weist das funktionelle Textilmaterial 1 nach der vorliegenden Erfindung im allgemeinen auch eine gute Wasserdampfdurchgangsrate auf, insbesondere von mindestens 5 1/m² pro 24 h, insbesondere von mindestens 10 1/m² pro 24 h, vorzugsweise von mindestens 15 1/m² pro 24 h, besonders bevorzugt von mindestens 20 1/m² pro 24 h, ganz besonders bevorzugt von mindestens 25 1/m² pro 24 h.

Für spezielle Anwendungen, insbesondere für den Bereich des ABC-Schutzes, kann es jedoch erforderlich sein, das funktionelle Textilmaterial 1 nach der vorliegenden Erfindung gasundurchlässig, insbesondere luftundurchlässig, auszustatten. Für diesen Fall kann es vorteilhaft sein, daß das funktionelle Textilmaterial 1 nach der vorliegenden Erfindung außerdem mindestens eine Membran (in der Figur nicht dargestellt) aufweist. Bei einer solchen Membran kann es sich beispielsweise um eine so genannte Klimamembran handeln. Insbesondere handelt es sich jedoch bei einer solchen Membran um eine zumindest im wesentlichen wasser- und gasundurchlässige, aber wasserdampfdurchlässige Membran, welche den Durchtritt chemischer und/oder biologischer Gifte und Schadstoffe verzögert oder gegenüber chemischen und/oder biologischen Giften und Schadstoffen zumindest im wesentlichen undurchlässig ist. Solche Membranen sind dem Fachmann als solche bekannt, so daß diesbezüglich nicht näher darauf eingegangen werden zu braucht. Im allgemeinen werden derartige Membranen im Rahmen des erfindungsgemäßen funktionellen Textilmaterials 1 mit einer Dicke von 1 bis 500 µm, insbesondere 1 bis 250 µm, vorzugsweise 1 bis 100 µm, bevorzugt 1 bis 50 µm, eingesetzt.

Gegenstand der vorliegenden Erfindung - gemäß einem weiteren Aspekt der vorliegenden Erfindung - ist die Verwendung eines wie zuvor beschriebenen funktionellen Textilmaterials nach der vorliegenden Erfindung zur Herstellung von Bekleidung sowie von Schutzmaterialien aller Art, insbesondere von Schutzanzügen, Schutzhandschuhen, Schutzschuhwerk, Schutzsocken, Kopf schutzbekleidung und anderen Schutzbekleidungsstücken und von Schutzabdeckungen und Schlafsäcken, insbesondere für zivile und militärische Zwekke, vorzugsweise für den ABC-Einsatz.

Gegenstand der vorliegenden Erfindung ist - gemäß einem wiederum weiteren Aspekt der vorliegenden Erfindung - gleichermaßen ein unter Verwendung des erfindungsgemäßen funktionellen Textilmaterials hergestelltes Bekleidungsstück bzw. ein Bekleidungsstück, welches ein funktionelles Textilmaterial nach der vorliegenden Erfindung aufweist. Ebenfalls Gegenstand der vorliegenden Erfindung sind Schutzmaterialien aller Art, insbesondere Schutzanzüge, Schutzhandschuhe, Schutzschuhwerk, Schutzsocken, Kopfschutzbekleidung und andere Schutzbekleidungsstücke sowie Schutzabdekkungen und Schlafsäcke, insbesondere für zivile und militärische Zwecke, vorzugsweise für den ABC-Einsatz, welche unter Verwendung eines funktionellen Textilmaterials nach der vorliegenden Erfindung hergestellt sind bzw. welche ein funktionelles Textilmaterial nach der vorliegenden Erfindung aufweisen.

Weiterer Gegenstand der vorliegenden Erfindung gemäß einem wiederum weiteren Aspekt der vorliegenden Erfindung ist die Verwendung eines funktionellen Textilmaterials nach der vorliegenden Erfindung zur Herstellung von Filtern und Filtermaterialien aller Art, insbesondere von Filtern und Filtermaterialien zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Schließlich sind weiterer Gegenstand der vorliegenden Erfindung Filter und Filtermaterialien aller Art, insbesondere Filter und Filtermaterialien zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, welche unter Verwendung eines funktionellen Textilmaterials nach der vorliegenden Erfindung hergestellt sind bzw. welche ein funktionelles Textilmaterial nach der vorliegenden Erfindung aufweisen.

Mit der vorliegenden Erfindung sind eine Vielzahl von Vorteilen verbunden, wie sie zuvor eingehend geschildert worden sind. Insbesondere ermöglicht die besondere Ausgestaltung des erfindungsgemäßen funktionellen Textilmaterials die Erreichung einer hohen Luftdurchlässigkeit und damit eines hohen Tragekomforts bei gleichzeitig zuverlässiger Fixierung der Mikrokapseln an dem funktionellen Textilmaterial. Das Textilmaterial behält durch den diskontinuierlichen Klebstoffauftrag seine Flexibilität bei. Über Größe, Anordnungsmuster und Anzahl der aufgetragenen Klebstoffpunkte kann beispielsweise die Menge der verklebten Mikrokapseln gezielt gesteuert werden. Beispielsweise durch die Verwendung von sogenannten reaktiven Hotmelt-Klebstoffsystemen können die Mikrokapseln nahe Raumtemperatur aufgeklebt werden und müssen zur Reaktion des Klebstoffs keinen UV- oder anderen Strahlen ausgesetzt werden. Alternativ können, wie zuvor geschildert, auch thermoplastische Klebstoffsysteme eingesetzt werden. Das mit den wirkstoffhaltigen Mikrokapseln versehene funktionelle Textilmaterial nach der vorliegende Erfindung ermöglicht eine Vielzahl von Anwendungsmöglichkeiten, insbesondere die Weiterverarbeitung zu Textilmaterialien, insbesondere zu Bekleidung.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Funktionelles Textilmaterial (1), wobei das funktionelle Textilmaterial (1) einen gas-, wasser- und wasserdampfdurchlässig ausgebildeten textilen Träger (2) umfaßt, wobei der textile Träger (2) mit Mikrokapseln (3) beaufschlagt ist, wobei die Mikrokapseln (3) mindestens einen Wirkstoff enthalten, wobei der Wirkstoff ausgewählt ist aus Stoffen mit physiologischer und/oder technischer Wirkung, und wobei die Mikrokapseln (3) mittels eines diskontinuierlich auf dem textilen Träger (2) applizierten Klebstoffs (4) an dem textilen Träger (2) befestigt sind,
**dadurch gekennzeichnet,**
**daß** der Stoff mit physiologischer und/oder technischer Wirkung aus der Gruppe von pharmazeutischen und/oder medizinischen Wirkstoffen, Katalysatoren und/oder katalytisch aktiven Verbindungen, Chemikalien sowie Mischungen der vorgenannten Verbindungen ausgewählt ist,
**daß** der Klebstoff (4) den textilen Träger (2) insgesamt zu höchstens 30 % bedeckt und
**daß** die Mikrokapseln (3) zu mindestens 50 % nicht von Klebstoff (4) bedeckt sind.

2. Funktionelles Textilmaterial nach Anspruch 1, **dadurch gekennzeichnet, daß** die Mikrokapseln (3) auf ihrer dem textilen Träger (2) abgewandten Seite mit einer textilen Abdeckschicht (5), insbesondere in Form eines textilen Flächengebildes, bedeckt und/oder beaufschlagt sind.

3. Funktionelles Textilmaterial nach Anspruch 1 oder 2, **dadurch gekennzeichnet, daß** der textile Träger (2) ein Flächengewicht von 25 bis 500 g/m², insbesondere 30 bis 250 g/m², vorzugsweise 35 bis 200 g/m², aufweist.

4. Funktionelles Textilmaterial nach einem oder mehreren der vorangehenden Ansprüche, **dadurch gekennzeichnet, daß** die Verklebung der Mikrokapseln (3) mit dem textilen Träger (2) durch einen diskontinuierlichen Klebstoffauftrag in Form von nichtzusammenhängenden, räumlich voneinander beabstandeten Kleberpunkten (4) erfolgt.

5. Funktionelles Textilmaterial nach Anspruch 4, **dadurch gekennzeichnet, daß** der Abstand der einzelnen Kleberpunkte (4) voneinander höchstens dem 20fachen, insbesondere höchstens dem 10fachen des Durchmessers der Kleberpunkte (4) entspricht und/oder daß der Durchmesser der Kleberpunkte (4) höchstens dem 20fachen, insbesondere höchstens dem 10fachen des Durchmessers der Mikrokapseln (3) entspricht, sofern der Durchmesser der Mikrokapseln (3) mindestens 50 µm beträgt.

6. Funktionelles Textilmaterial nach einem oder mehreren der vorangehenden Ansprüche, **dadurch gekennzeichnet, daß** der Klebstoff (4) den textilen Träger (2) insgesamt zu 5 bis 30 %, insbesondere 10 bis 25 %, vorzugsweise 10 bis 20 %, bedeckt.

7. Funktionelles Textilmaterial nach einem oder mehreren der vorangehenden Ansprüche, **dadurch gekennzeichnet, daß** der Klebstoff (4) mit einem Flächengewicht (Trockengewicht) von 5 bis 30 g/m², insbesondere 5 bis 25 g/m², vorzugsweise 10 bis 20 g/m², auf den textilen Träger (2) aufgebracht ist.

8. Funktionelles Textilmaterial nach einem oder mehreren der vorangehenden Ansprüche, **dadurch gekennzeichnet, daß** die Mikrokapseln (3) einen Durchmesser von 1 µm bis 5 mm, insbesondere 5 µm bis 2 mm, vorzugsweise 10 µm bis 1 mm, besonders bevorzugt 50 µm bis 0,8 mm, aufweisen.

9. Funktionelles Textilmaterial nach einem oder mehreren der vorangehenden Ansprüche, **dadurch gekennzeichnet, daß** die Mikrokapseln (3) in einer Menge von 5 bis 500 g/m², insbesondere 10 bis 400 g/m², vorzugsweise 20 bis 300 g/m², bevorzugt 25 bis 250 g/m², besonders bevorzugt 50 bis 200 g/m², auf den textilen Träger (2) aufgebracht sind.

10. Funktionelles Textilmaterial nach einem oder mehreren der vorangehenden Ansprüche, **dadurch gekennzeichnet, daß** die Mikrokapseln (3) den Wirkstoff in Mengen von 1 bis 99 Gew.-%, insbesondere 5 bis 90 Gew.-%, vorzugsweise 10 bis 80 Gew.-%, besonders bevorzugt 25 bis 75 Gew.-%, bezogen auf die Mikrokapseln (3), enthalten.

11. Funktionelles Textilmaterial nach einem oder mehreren der vorangehenden Ansprüche, **dadurch gekennzeichnet, daß** der textile Träger (2) außerdem ein chemische Gifte adsorbierendes Adsorbens, insbesondere auf Basis von Aktivkohle, umfaßt.

12. Funktionelles Textilmaterial nach einem oder mehreren der vorangehenden Ansprüche, **dadurch gekennzeichnet, daß** das funktionelle Textilmaterial (1) ein Gesamtflächengewicht von 75 bis 1.000 g/m², insbesondere 100 bis 800 g/m², vorzugsweise 125 bis 500 g/m², aufweist.

13. Funktionelles Textilmaterial nach einem oder mehreren der vorangehenden Ansprüche, **dadurch gekennzeichnet, daß** das funktionelle Textilmaterial (1) gasdurchlässig, insbesondere luftdurchlässig, ist, insbesondere wobei die Gas- bzw. Luftdurchlässigkeit des funktionellen Textilmaterials (1) mindestens 50 l·m⁻²·s⁻¹, insbesondere mindestens 100 l·m⁻²·s⁻¹, vorzugsweise mindestens 200 l·m⁻²·s⁻¹, besonders bevorzugt mindestens 500 l·m⁻²·s⁻¹, und bis zu 10.000 l·m⁻²·s⁻¹ beträgt.

14. Funktionelles Textilmaterial nach einem oder mehreren der vorangehenden Ansprüche, **dadurch gekennzeichnet, daß** das funktionelle Textilmaterial (1) eine Wasserdampfdurchgangsrate von mindestens 5 l/m² pro 24 h, insbesondere mindestens 10 l/m² pro 24 h, vorzugsweise mindestens 15 l/m² pro 24 h, besonders bevorzugt mindestens 20 l/m² pro 24 h, ganz besonders bevorzugt mindestens 25 l/m² pro 24 h, aufweist.

15. Funktionelles Textilmaterial nach einem oder mehreren der vorangehenden Ansprüche, **dadurch gekennzeichnet, daß** das funktionelle Textilmaterial (1) außerdem mindestens eine Membran aufweist.

16. Verwendung eines funktionellen Textilmaterials (1) nach einem der vorangehenden Ansprüche zur Herstellung von Bekleidung sowie Schutzmaterialien aller Art, insbesondere von Schutzanzügen, Schutzhandschuhen, Schutzschuhwerk, Schutzsocken, Kopfschutzbekleidung und anderen Schutzbekleidungsstücken und von Schutzabdeckungen und Schlafsäcken, insbesondere für zivile und militärische Zwecke, vorzugsweise alle vorgenannten Schutzmaterialien für den ABC-Einsatz.

17. Verwendung eines funktionellen Textilmaterials (1) nach einem der vorangehenden Ansprüche zur Herstellung von Filtern und Filtermaterialien aller Art, insbesondere von Filtern und Filtermaterialien zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

18. Bekleidung, hergestellt unter Verwendung eines funktionellen Textilmaterials (1) nach einem der vorangehenden Ansprüche und/oder aufweisend ein funktionelles Textilmaterial (1) nach einem der vorangehenden Ansprüche.

19. Schutzmaterialien aller Art, insbesondere Schutzanzüge, Schutzhandschuhe, Schutzschuhwerk, Schutzsocken, Kopfschutzbekleidung und andere Schutzbekleidungsstücke sowie Schutzabdeckurigen und Schlafsäcke, insbesondere für zivile und militärische Zwecke, vorzugsweise für den ABC-Einsatz, hergestellt unter Verwendung eines funktionellen Textilmaterials (1) nach einem der vorangehenden Ansprüche und/oder aufweisend ein funktionelles Textilmaterial (1) nach einem der vorangehenden Ansprüche.

20. Filter und Filtermaterialien aller Art, insbesondere Filter und Filtermaterialien zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung eines funktionellen Textilmaterials (1) nach einem der vorangehenden Ansprüche und/oder aufweisend ein funktionelles Textilmaterial (1) nach einem der vorangehenden Ansprüche.

## Claims

1. Functional textile material (1), the functional textile material (1) comprising a textile carrier (2) configured to be gas, water and water vapour permeable, the textile carrier (2) having microcapsules (3) applied thereto, the microcapsules (3) containing at least one active component, the active component being selected from entities having physiological and/or technical activity, and the microcapsules (3) being secured to the textile carrier (2) by means of an adhesive (4) applied discontinuously on the textile carrier (2),
**characterized**
**in that** the entity having physiological and/or technical activity being selected from the group of pharmaceutically and/or medically active components, catalysts and/or catalytically active compounds, chemicals and also mixtures thereof,
**in that** the adhesive (4) covers the textile carrier (2) altogether to an extent of not more than 30%, and
**in that** at least 50% of the microcapsules (3) are not covered by adhesive (4).

2. Functional textile material according to Claim 1, **characterized in that** the microcapsules (3) are covered and/or overlaid with a textile covering layer (5), in particular in the form of a textile fabric, on that side of theirs which is distal from the textile carrier (2).

3. Functional textile material according to Claim 1 or 2, **characterized in that** the textile carrier (2) has a basis weight of 25 to 500 g/m², in particular 30 to 250 g/m², preferably 35 to 200 g/m².

4. Functional textile material according to one or more of the preceding claims, **characterized in that** the adhering of the microcapsules (3) to the textile carrier (2) is effected by a discontinuous application of adhesive in the form of noncoherent, spaced-apart adhesive dots (4).

5. Functional textile material according to Claim 4, **characterized in that** the distance between the individual adhesive dots (4) is not more than 20 times, in particular not more than 10 times, the diameter of the adhesive dots (4) and/or **in that** the diameter of the adhesive dots (4) is not more than 20 times, in particular not more than 10 times, the diameter of the microcapsules (3) when the diameter of the microcapsules (3) is at least 50 µm.

6. Functional textile material according to one or more of the preceding claims, **characterized in that** the adhesive (4) covers the textile carrier (2) altogether to an extent of 5 to 30%, in particular 10 to 25%, preferably 10 to 20%.

7. Functional textile material according to one or more of the preceding claims, **characterized in that** the adhesive (4) is applied to the textile carrier (2) at a basis weight (dry weight) of 5 to 30 g/m², in particular 5 to 25 g/m², preferably 10 to 20 g/m².

8. Functional textile material according to one or more of the preceding claims, **characterized in that** the microcapsules (3) have a diameter of 1 µm to 5 mm, in particular 5 µm to 2 mm, preferably 10 µm to 1 mm, particularly preferably 50 µm to 0.8 mm.

9. Functional textile material according to one or more of the preceding claims, **characterized in that** the microcapsules (3) are applied to the textile carrier (2) in an amount of 5 to 500 g/m², in particular 10 to 400 g/m², preferably 20 to 300 g/m², with preference 25 to 250 g/m², particularly preferably 50 to 200 g/m².

10. Functional textile material according to one or more of the preceding claims, **characterized in that** the microcapsules (3) contain the active component in amounts of 1% to 99% by weight, in particular 5% to 90% by weight, preferably 10% to 80% by weight, particularly preferably 25% to 75% by weight, based on the microcapsules (3).

11. Functional textile material according to one or more of the preceding claims, **characterized in that** the textile carrier (2) further comprises an in particular activated carbon adsorbent which adsorbs chemical poisons.

12. Functional textile material according to one or more of the preceding claims, **characterized in that** the functional textile material (1) has an overall basis weight of 75 to 1000 g/m², in particular 100 to 800 g/m², preferably 125 to 500 g/m².

13. Functional textile material according to one or more of the preceding claims, **characterized in that** the functional textile material (1) is gas permeable, in particular air permeable, in particular the gas or air transmission rate of the functional textile material (1) being at least 50 l·m⁻²·s⁻¹, in particular at least 100 l·m⁻²·s⁻¹, preferably at least 200 l·m⁻²·s⁻¹, particularly preferably at least 500 l·m⁻²·s⁻¹ , and up to 10 000 l·M⁻²·s⁻¹.

14. Functional textile material according to one or more of the preceding claims, **characterized in that** the functional textile material (1) has a water vapour transmission rate of at least 5 l/m² per 24 h, in particular at least 10 l/m² per 24 h, preferably at least 15 l/m² per 24 h, particularly preferably at least 20 l/m² per 24 h, very particularly preferably at least 25 l/m² per 24 h.

15. Functional textile material according to one or more of the preceding claims, **characterized in that** the functional textile material (1) additionally includes at least one membrane.

16. Use of a functional textile material (1) according to one or more of the preceding claims in the manufacture of apparel and also protective materials of any kind, in particular of protective suits, protective gloves, protective footwear, protective socks, head-protective apparel and other protective apparel pieces and of protective coverings and sleeping bags, for civil and military purposes, preferably all aforementioned protective materials for NBC deployment.

17. Use of a functional textile material (1) according to one or more of the preceding claims in the manufacture of filters and filter materials of any kind, in particular of filters and filter materials for removing noxiant, odorant and toxicant materials of any kind, in particular from air and/or gas streams, such as NBC protective mask filters, odour filters, area filters, air filters, in particular filters for indoor air cleaning, adsorption-capable carrier structures and filters for the medical sector.

18. Apparel obtained using a functional textile material (1) according to any one of the preceding claims and/or including a functional textile material (1) according to any one of the preceding claims.

19. Protective materials of any kind, in particular protective suits, protective gloves, protective footwear, protective socks, head-protective apparel and other protective apparel pieces and protective coverings and sleeping bags, in particular for civil and military purposes, preferably for NBC deployment, obtained using a functional textile material (1) according to any one of the preceding claims and/or including a functional textile material (1) according to any one of the preceding claims.

20. Filter and filter materials of any kind, in particular filter and filter materials for removing noxiant, odorant and toxicant materials of any kind, in particular from air and/or gas streams, such as NBC protective mask filters, odour filters, area filters, air filters, in particular filters for indoor air cleaning, adsorption-capable carrier structures and filters for the medical sector, obtained using a functional textile material (1) according to any one of the preceding claims and/or including a functional textile material (1) according to any one of the preceding claims.

## Revendications

1. Tissu fonctionnel (1), ledit tissu fonctionnel (1) comprenant un support textile (2) configuré pour être perméable aux gaz, à l'eau et à la vapeur d'eau, le support textile (2) étant pourvu de microcapsules (3), les microcapsules (3) contenant au moins un principe actif, le principe actif étant choisi parmi des substances présentant une action physiologique et/ou technique, et les microcapsules (3) étant fixées sur le support textile (2) au moyen d'une colle (4) appliquée de manière discontinue sur le support textile (2),
**caractérisé**
**en ce que** la substance présentant une action physiologique et/ou technique est choisie parmi le groupe de principes actifs pharmaceutiques et/ou médicaux, de catalyseurs et/ou de composés catalytiquement actifs, d'agents chimiques ainsi que de mélanges des composés sus-mentionnés,
**en ce que** la colle (4) recouvre globalement le support textile (2) au plus à 30 %, et
**en ce qu'**au moins 50 % des microcapsules (3) ne soient pas recouvertes de colle (4).

2. Tissu fonctionnel selon la revendication 1, **caractérisé en ce que** les microcapsules (3) sont recouvertes et/ou revêtues sur leur côté détourné du support textile (2) d'une couche de recouvrement textile (5), en particulier sous la forme d'une nappe textile.

3. Tissu fonctionnel selon la revendication 1 ou 2, **caractérisé en ce que** le support textile (2) a un grammage de 25 à 500 g/m², notamment de 30 à 250 g/m², préférentiellement de 35 à 200 g/m².

4. Tissu fonctionnel selon l'une quelconque ou plusieurs des revendications précédentes, **caractérisé en ce que** le collage des microcapsules (3) au support textile (2) est réalisé par application discontinue de colle sous forme de points de colle (4) non liés et espacés mutuellement dans l'espace.

5. Tissu fonctionnel selon la revendication 4, **caractérisé en ce que** la distance entre les points de colle distincts (4) équivaut au plus à 20 fois, notamment au plus à 10 fois, le diamètre des points de colle (4) et/ou **en ce que** le diamètre des points de colle (4) équivaut au plus à 20 fois, notamment au plus à 10 fois, le diamètre des microcapsules (3) dans la mesure où le diamètre des microcapsules (3) est d'au moins 50 µm.

6. Tissu fonctionnel selon l'une quelconque ou plusieurs des revendications précédentes, **caractérisé en ce que** la colle (4) recouvre globalement le support textile (2) à 5 à 30 %, notamment 10 à 25 %, préférentiellement 10 à 20 %.

7. Tissu fonctionnel selon l'une quelconque ou plusieurs des revendications précédentes, **caractérisé en ce que** la colle (4) est appliquée en un grammage (poids sec) de 5 à 30 g/m², notamment de 5 à 25 g/m², préférentiellement de 10 à 20 g/m² sur le support textile (2).

8. Tissu fonctionnel selon l'une quelconque ou plusieurs des revendications précédentes, **caractérisé en ce que** les microcapsules (3) ont un diamètre compris entre 1 µm et 5 mm, notamment 5 µm à 2 mm, préférentiellement 10 µm à 1 mm, particulièrement préférablement 50 µm à 0,8 mm.

9. Tissu fonctionnel selon l'une quelconque ou plusieurs des revendications précédentes, **caractérisé en ce que** les microcapsules (3) sont appliquées en une quantité de 5 à 500 g/m², notamment de 10 à 400 g/m², préférentiellement de 20 à 300 g/m², de préférence de 25 à 250 g/m², particulièrement préférablement de 50 à 200 g/m², sur le support textile (2).

10. Tissu fonctionnel selon l'une quelconque ou plusieurs des revendications précédentes, **caractérisé en ce que** les microcapsules (3) contiennent le principe actif en quantités de 1 à 99 % en poids, notamment 5 à 90 % en poids, préférentiellement 10 à 80 % en poids, particulièrement préférablement 25 à 75 % en poids, par rapport aux microcapsules (3).

11. Tissu fonctionnel selon l'une quelconque ou plusieurs des revendications précédentes, **caractérisé en ce que** le support textile (2) comporte en outre un agent adsorbant, notamment à base de charbon actif, qui adsorbe les substances toxiques.

12. Tissu fonctionnel selon l'une quelconque ou plusieurs des revendications précédentes, **caractérisé en ce que** le tissu fonctionnel (1) présente un grammage compris entre 75 et 1 000 g/m², notamment 100 et 800 g/m², préférentiellement 125 et 500 g/m².

13. Tissu fonctionnel selon l'une quelconque ou plusieurs des revendications précédentes, **caractérisé en ce que** le tissu fonctionnel (1) est perméable au gaz, notamment perméable à l'air, notamment la perméabilité au gaz ou à l'air du tissu fonctionnel (1) étant d'au moins 50 l·m⁻²·s⁻¹, notamment d'au moins 100 l-m⁻²·s⁻¹, préférentiellement d'au moins 200 l-m⁻².s⁻¹, particulièrement préférablement d'au moins 500 l-m⁻².s⁻¹, et jusqu'à 10 000 l-m⁻².s⁻¹.

14. Tissu fonctionnel selon l'une quelconque ou plusieurs des revendications précédentes, **caractérisé en ce que** le tissu fonctionnel (1) présente un taux de perméabilité à la vapeur d'eau d'au moins 5 l/m² par période de 24 heures, notamment d'au moins 10 l/m² par période de 24 heures, préférentiellement d'au moins 15 l/m² par période de 24 heures, particulièrement préférablement d'au moins 20 l/m² par période de 24 heures, tout particulièrement préférablement d'au moins 25 l/m² par période de 24 heures.

15. Tissu fonctionnel selon l'une quelconque ou plusieurs des revendications précédentes, **caractérisé en ce que** le tissu fonctionnel (1) présente en outre au moins une membrane.

16. Utilisation d'un tissu fonctionnel (1) selon l'une quelconque des revendications précédentes pour la fabrication de vêtements ainsi que d'équipements de protection de tous genres, notamment d'ensembles de protection, de gants de protection, de chaussures de protection, de chaussettes de protection, de chapeaux de protection et d'autres vêtements de protection et de recouvrements de protection et de sacs de couchage destinés à des fins civiles et militaires, tous les équipements de protection précités étant destinés de préférence à une utilisation NBC.

17. Utilisation d'un tissu fonctionnel (1) selon l'une quelconque des revendications précédentes pour la fabrication de filtres et matériaux filtrants de tous genres, notamment de filtres et de matériaux filtrants servant à éliminer des substances polluantes, odorantes et toxiques de tous genres notamment de courants d'air et/ou de gaz, comme de filtres de masques de protection NBC, de filtres à odeurs, de filtres surfaciques, de filtres à air, notamment de filtres de purification d'air ambiant, de structures porteuses aptes à l'adsorption et de filtres destinés au secteur médical.

18. Vêtements fabriqués en utilisant un tissu fonctionnel (1) selon l'une quelconque des revendications précédentes et/ou comportant un tissu fonctionnel (1) selon l'une quelconque des revendications précédentes.

19. Equipements de protection de tous genres, notamment ensembles de protection, gants de protection, chaussures de protection, chaussettes de protection, chapeaux de protection et autres vêtements de protection ainsi que recouvrements de protection et sacs de couchage notamment destinés à des fins civiles et militaires, destinés de préférence à une utilisation NBC, fabriqués en utilisant un tissu fonctionnel (1) selon l'une quelconque des revendications précédentes et/ou comportant un tissu fonctionnel (1) selon l'une quelconque des revendications précédentes.

20. Filtres et matériaux filtrants de tous genres, notamment filtres et matériaux filtrants servant à éliminer des substances polluantes, odorantes et toxiques de tous genres notamment de courants d'air et/ou de gaz, comme filtres de masques de protection NBC, filtres à odeurs, filtres surfaciques, filtres à air, notamment filtres de purification d'air ambiant, structures porteuses aptes à l'adsorption et filtres destinés au secteur médical, fabriqués en utilisant un tissu fonctionnel (1) selon l'une quelconque des revendications précédentes et/ou comportant un tissu fonctionnel (1) selon l'une quelconque des revendications précédentes.
